# EUROPÄISCHE PATENTANMELDUNG

(11) **EP 3 120 678 A1**
(43) Veröffentlichungstag der Anmeldung: **25.01.2017**
(21) Anmeldenummer: 16401039.9
(22) Anmeldetag: 07.07.2016
(51) Int. Cl.: A01B 69/00, A01D 41/127

(54) **STEUERVORRICHTUNG FÜR EINE LANDWIRTSCHAFTLICHE MASCHINE**

(30) Priorität: 14.07.2015 DE 102015111353
(71) Anmelder: Amazonen-Werke H. Dreyer GmbH & Co. KG, 49205 Hasbergen (DE)
(72) Erfinder: Nagel, Michael, 27804 Berne (DE)

(57) **Zusammenfassung**

Die Erfindung umfasst eine Steuervorrichtung für eine landwirtschaftliche Maschine, wobei über die Steuervorrichtung wenigstens eine Einstellung der landwirtschaftlichen Maschine veränderbar ist, und wobei über die Steuervorrichtung wenigstens ein Arbeitsschritt der landwirtschaftlichen Maschine steuerbar und/oder regelbar ist, wobei die Steuervorrichtung einen Touchscreen umfasst, wobei über Eingaben einer Bedienperson über den Touchscreen die wenigstens eine Einstellung veränderbar und der wenigstens eine Arbeitsschritt auswählbar ist, wobei der Touchscreen zur Darstellung von wenigstens zwei Anzeigen konfiguriert ist, wobei in einer ersten Anzeige Elemente (3, 4, 5, 6, 7) betreffend die landwirtschaftliche Maschine, Einstellungen der landwirtschaftlichen Maschine und/oder ein durch die landwirtschaftliche Maschine auszubringendes Produkt und in einer zweiten Anzeige Elemente (11, 12, 13, 14) betreffend mit der landwirtschaftlichen Maschine durchführbare Arbeitsschritte angezeigt werden, und wobei zwischen den wenigstens zwei Anzeigen durch Betätigen eines Auswahlelementes (8) gewechselt werden kann.

## Beschreibung

Die vorliegende Erfindung betrifft eine Steuervorrichtung für eine landwirtschaftliche Maschine.

Derartige Steuervorrichtungen sind bekannt, insbesondere um über die Steuervorrichtung wenigstens eine Einstellung der landwirtschaftlichen Maschine zu verändern und/oder über die Steuervorrichtung wenigstens einen Arbeitsschritt der landwirtschaftlichen Maschine zu steuern und/oder zu regeln.

Die bekannten Steuervorrichtungen weisen dafür üblicherweise einen Bildschirm auf, auf dem verschiedene Anzeige- oder Bedienelemente angeordnet sind. Durch Interaktion mit diesen Bedienelementen ist es möglich, die Einstellungen der landwirtschaftlichen Maschine zu ändern und/oder Arbeitsschritte der Maschine zu steuern. Üblicherweise sind Elemente betreffend die Einstellung der Maschine und Elemente bezüglich der Steuerung von Arbeitsschritten dabei in einer gemeinsamen Anzeige angeordnet. Dadurch ist es für die Bedienperson verhältnismäßig zeitaufwendig, die richtigen Bedienelemente aufzufinden und zu betätigen. Diese Zeit fehlt mitunter bei der Bearbeitung des Feldes, weshalb bekannte Steuervorrichtungen insofern die Effizienz der landwirtschaftlichen Maschinen negativ beeinflussen.

Aufgabe der vorliegenden Erfindung ist es daher, eine Steuervorrichtung für eine landwirtschaftliche Maschine bereitzustellen, welche eine effizientere Steuerung der Maschine ermöglicht.

Diese Aufgabe wird durch eine Steuervorrichtung gemäß Patentanspruch 1 gelöst. Weitere vorteilhafte Ausgestaltungen der Erfindung sind in den abhängigen Ansprüchen angegeben.

Gemäß der Erfindung ist es also vorgesehen, dass die Steuervorrichtung einen Touchscreen umfasst, der zur Darstellung von wenigstens zwei getrennten Anzeigen konfiguriert ist. In einer ersten Anzeige werden Elemente betreffend die landwirtschaftliche Maschine, Einstellungen der landwirtschaftlichen Maschine und/oder ein durch die landwirtschaftliche Maschine auszubringendes Produkt angezeigt und in einer zweiten Anzeige Elemente betreffend mit der landwirtschaftlichen Maschine durchführbare Arbeitsschritte. Zwischen den beiden Anzeigen kann erfindungsgemäß durch Betätigen eines Auswahlelements gewechselt werden.

Dadurch, dass die Elemente betreffend die Maschine, deren Einstellung und/oder das Produkt einerseits und Elemente bezüglich der durchführbaren Arbeitsschritte andererseits jeweils in einer separaten Anzeige angezeigt werden, kann die Bedienperson wesentlich schneller und damit effektiver auf die entscheidenden Schaltflächen oder Bedienelemente zugreifen und die gewünschten Elemente auswählen. Die Bedienperson muss daher weniger Zeit aufwenden, die gewünschten Elemente aufzufinden und auszuwählen, wodurch das Hauptaugenmerk der Bedienperson auf der Bearbeitung der landwirtschaftlichen Fläche liegen kann. Die Arbeitseffizienz der landwirtschaftlichen Maschine kann dadurch verbessert werden.

Insbesondere können alle Bedienelemente der ersten Anzeige Elemente betreffend die landwirtschaftliche Maschine, Einstellungen der landwirtschaftlichen Maschine und/oder ein durch die landwirtschaftliche Maschine auszubringendes Produkt sein und alle Bedienelemente der zweiten Anzeige Elemente betreffend mit der landwirtschaftlichen Maschine durchführbare Arbeitsschritte.

Bei der Steuervorrichtung kann es sich insbesondere um einen Bordcomputer für eine landwirtschaftliche Maschine handeln oder sie kann in einen solchen Bordcomputer integriert sein. Die Steuervorrichtung kann zur Steuerung einer beliebigen landwirtschaftlichen Maschine konfiguriert sein. Beispielhafte landwirtschaftliche Maschinen zum Bearbeiten einer landwirtschaftlichen Fläche umfassen Düngerstreuer, Sämaschinen und/oder Feldspritzen.

Bei dem Touchscreen oder berührungsempfindlichen Bildschirm kann es sich um einen resistiven, kapazitiven oder induktiven Touchscreen handeln. Der Touchscreen dient sowohl als Anzeigevorrichtung, als auch als Eingabeelement für die Steuervorrichtung. Zusätzlich zum Touchscreen können jedoch auch noch weitere Eingabemittel vorgesehen sein, beispielsweise in Form von Schaltern und/oder Tasten.

Die wenigstens zwei Anzeigen können jeweils die gesamte verfügbare Anzeigefläche des Touchscreens einnehmen. Alternativ können die Anzeigen auch in einem Teilbereich der zur Verfügung stehenden Anzeigefläche des Touchscreens angezeigt werden. In diesem Fall können in einem weiteren, unterschiedlichen Teilbereich der verfügbaren Anzeigefläche des Touchscreens weitere Bedienelemente angezeigt werden. Diese weiteren Bedienelemente können unabhängig davon, welche der beiden Anzeigen dargestellt wird, angezeigt werden. Die weiteren Bedienelemente können jedoch auch in Abhängigkeit davon, welche der wenigstens zwei Anzeigen dargestellt wird, variieren.

Die in den Anzeigen dargestellten Elemente betreffend die landwirtschaftliche Maschine, Einstellungen der landwirtschaftlichen Maschine und/oder ein durch die landwirtschaftliche Maschine auszubringendes Produkt bzw. betreffend mit der landwirtschaftlichen Maschine durchführbare Arbeitsschritte können insbesondere durch eine Bedienperson auswählbare Bedienelemente oder Steuerelemente sein. Mit anderen Worten kann die Auswahl eines dieser Elemente durch eine Bedienperson über Interaktion mit dem Touchscreen eine Reaktion der Steuervorrichtung bewirken. Mit anderen Worten kann es sich bei den Elementen um interaktive Schaltflächen handeln.

Die Reaktion der Steuervorrichtung kann beispielsweise eine Anzeige einer weiteren, unterschiedlichen Anzeige und/oder ein Erzeugen eines Steuer- oder Regelsignals, das an ein Gerät der landwirtschaftlichen Maschine übertragen wird, umfassen.

Auch bei dem Auswahlelement kann es sich um eine interaktive Schaltfläche handeln. Mit anderen Worten kann eine Bedienperson über den Touchscreen das Auswahlelement betätigen, wodurch zwischen den wenigstens zwei Darstellungen gewechselt wird. Wenn also zunächst beispielsweise die erste Anzeige angezeigt wird kann nach Betätigen des Auswahlelementes anstelle der ersten Anzeige die zweite Anzeige durch den Touchscreen dargestellt werden und umgekehrt.

Das Auswahlelement kann dabei ein erstes Anzeigefeld und ein zweites Anzeigefeld umfassen, wobei das erste Anzeigefeld die erste Anzeige und das zweite Anzeigefeld die zweite Anzeige repräsentiert, wobei das Anzeigefeld der angezeigten oder aktiven Anzeige unterschiedlich dargestellt wird vom Anzeigefeld der nicht angezeigten oder inaktiven Anzeige. Dadurch kann die Bedienperson einfach und schnell erkennen, welche der wenigstens zwei Anzeigen aktuell dargestellt wird.

Durch Interaktion oder Auswählen des Anzeigefelds, das die nicht angezeigte oder inaktive Anzeige repräsentiert, kann auf diese nicht angezeigte oder inaktive Anzeige gewechselt werden. Mit anderen Worten kann dadurch die bislang nicht angezeigte inaktive Anzeige zur angezeigten oder aktiven Anzeige werden, während die bislang angezeigte aktive Anzeige nach Betätigung des Anzeigefelds zur inaktiven oder nicht angezeigten Anzeige wird. Nach dem Wechsel kann die Darstellung der Anzeigefelder des Auswahlelements entsprechend wechseln.

Das derart ausgebildete Auswahlelement kann daher sowohl zum Wechseln zwischen den Anzeigen als auch als Indikator für die jeweils dargestellte aktive Anzeige verwendet werden.

Das erste Anzeigefeld und/oder das zweite Anzeigefeld kann eine Kennzeichnung aufweisen, welche auf die erste Anzeige bzw. zweite Anzeige hinweist. Bei der Kennzeichnung kann es sich beispielsweise um ein Piktogramm handeln. Alternativ oder zusätzlich ist es möglich, dass die Anzeigefelder unterschiedliche Farben aufweisen. Dadurch ist es für die Bedienperson möglich, rasch die Beziehung zwischen Anzeige und Anzeigefeld des Auswahlelements zu erfassen.

Der Touchscreen kann so konfiguriert sein, dass die Anzeigefelder in Form von Registerkartenreitern über der jeweiligen Anzeige angezeigt werden. Die wenigstens zwei Anzeigen können dann gewissermaßen elektronischen Registerkarten entsprechen, welche den Reitern zugeordnet sind. Dies ermöglicht eine besonders übersichtliche Darstellung der Anzeigen.

Bedienelemente der ersten Anzeige und/oder der zweiten Anzeige, insbesondere oben beschriebene Bedien- oder Steuerelemente, welche während der Bearbeitung einer landwirtschaftlichen Fläche benötigt werden, können größer dargestellt werden als andere Elemente der Anzeige. Dies erleichtert die Bedienung der Steuervorrichtung während der Arbeit. Insbesondere wird die Bedienung von Touchscreens während des Bearbeitens einer landwirtschaftlichen Fläche dadurch erschwert, dass sich der Touchscreen üblicherweise unvorhersehbar mit der Maschine bewegt, beispielsweise aufgrund von Bodenunebenheiten. Für die Bedienperson ist es dann schwierig, das korrekte Bedienelement auszuwählen. Dies kann dadurch verbessert werden, dass die Elemente größere Schaltflächen zugeordnet bekommen.

Die Elemente, die auch während des Bearbeitens der landwirtschaftlichen Fläche benötigt werden, können beispielsweise Elemente umfassen, welche zur Steuerung und/oder Regelung von Arbeitsschritten der landwirtschaftlichen Maschine während des Bearbeitens der landwirtschaftlichen Fläche erforderlich sind. Auch Elemente, welche beispielsweise die Anzeige von Maschinenparametern bewirken, beispielsweise der aktuellen Ausbringmenge oder der Position der landwirtschaftlichen Maschine, können während des Bearbeitens der landwirtschaftlichen Fläche benötigt werden.

Die Größe dieser Elemente kann insbesondere abhängig von der Fahrgeschwindigkeit der landwirtschaftlichen Maschine oder des zugehörigen Zugfahrzeugs bestimmt werden. Beispielsweise können die Elemente umso größer dargestellt werden, je höher die Geschwindigkeit ist. Dadurch ist es auch möglich, die Sicherheit zu verbessern, da bei hoher Geschwindigkeit die Auswahl durch besonders große Bedienelemente vereinfacht werden kann.

Die Erfindung stellt außerdem eine landwirtschaftliche Maschine bereit, umfassend eine oben beschriebene Steuervorrichtung. Die landwirtschaftliche Maschine kann insbesondere ein Düngerstreuer, eine Sämaschine oder eine Feldspritze sein.

Die Erfindung stellt auch eine Steuervorrichtung einer landwirtschaftlichen Maschine bereit, wobei die Steuervorrichtung eine oder mehrere der oben genannten Merkmale aufweist.

Die Erfindung stellt außerdem ein Computer-implementiertes Verfahren zum Bedienen einer landwirtschaftlichen Maschine bereit, umfassend die Schritte:

Darstellen einer ersten oder zweiten Anzeige auf einem Touchscreen einer Steuervorrichtung der landwirtschaftlichen Maschine, wobei in der ersten Anzeige Elemente betreffend die landwirtschaftliche Maschine, Einstellungen der landwirtschaftlichen Maschine und/oder ein durch die landwirtschaftliche Maschine auszubringendes Produkt und in der zweiten Anzeige Elemente betreffend mit der landwirtschaftlichen Maschine durchführbare Arbeitsschritte angezeigt werden,

Darstellen eines Auswahlelementes zum Wechseln der Anzeige,

Detektieren einer Betätigung des Auswahlelements durch eine Bedienperson, und Wechseln der Anzeige von der dargestellten ersten oder zweiten Anzeige zur jeweils nicht dargestellten zweiten oder ersten Anzeige.

Das Verfahren kann also ein Verfahren sein, welches mit einer oben genannten Steuervorrichtung durchgeführt werden kann oder durchgeführt wird. Die landwirtschaftliche Maschine, die erste und zweite Anzeige, der Touchscreen und/oder die Steuervorrichtung können daher eines oder mehrere der oben genannten Merkmale aufweisen.

Auch die Elemente der ersten Anzeige und zweiten Anzeige und/oder das Auswahlelement können eines oder mehrere der oben genannten Merkmale aufweisen.

Insbesondere kann das Darstellen des Auswahlelements ein Darstellen eines ersten Anzeigefeldes und eines zweiten Anzeigefeldes umfassen, wobei das erste Anzeigefeld die erste Anzeige und das zweite Anzeigefeld die zweite Anzeige repräsentiert, und wobei das Anzeigefeld der angezeigten oder aktiven Anzeige unterschiedlich dargestellt wird als das Anzeigefeld der nicht angezeigten oder inaktiven Anzeige.

Die Anzeigefelder können insbesondere in Form von Registerkartenreitern über der jeweiligen Anzeige angezeigt werden.

Die Anzeigefelder des Auswahlelements können ebenfalls eines oder mehrere der oben genannten Merkmale aufweisen.

Weitere Merkmale und Vorteile der Erfindung werden nachfolgend anhand der beispielhaften Figuren erläutert. Dabei zeigt:
- Fig. 1: eine schematische Darstellung einer ersten Anzeige einer beispielhaften Steuervorrichtung; und
- Fig. 2: eine beispielhafte zweite Anzeige einer beispielhaften Steuervorrichtung.

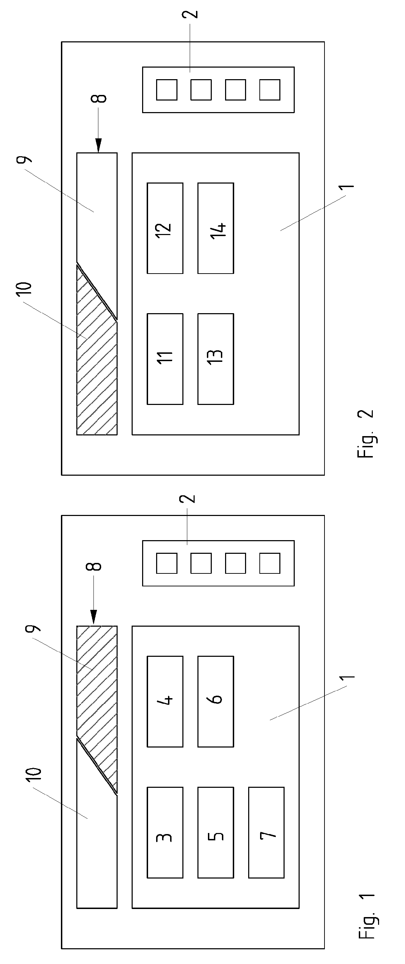

Fig. 1 zeigt schematisch eine erste Anzeige einer Steuervorrichtung für eine landwirtschaftliche Maschine, wobei die Anzeige auf einem Touchscreen der Steuervorrichtung angezeigt oder dargestellt wird. Bei dem Touchscreen kann es sich um einen resistiven, kapazitiven oder induktiven Touchscreen handeln. Die Steuervorrichtung kann Teil eines Bordcomputers sein oder einem Bordcomputer für eine landwirtschaftliche Maschine entsprechen.

Die erste Anzeige wird in diesem Beispiel in einem Teilbereich 1 der zur Verfügung stehenden Anzeigefläche des Touchscreens dargestellt. Es wäre jedoch auch möglich, dass die erste Anzeige die gesamte zur Verfügung stehende Anzeigefläche des Touchscreens einnimmt. In dem Beispiel der Fig. 1 sind in einem weiteren Anzeigebereich 2 weitere Bedienelemente dargestellt, welche insbesondere unabhängig davon, ob die erste oder zweite Anzeige im Teilbereich 1 dargestellt wird, angezeigt werden.

Die erste Anzeige umfasst Elemente, insbesondere interaktive Schalt- oder Bedienelemente 3, 4, 5, 6, 7 betreffend die landwirtschaftliche Maschine, Einstellungen der landwirtschaftlichen Maschine und/oder ein durch die landwirtschaftliche Maschine auszubringendes Produkt. Schaltelement 3 kann beispielsweise Maschineneinstellungen betreffen und Schaltelement 6 das durch die landschaftlich Maschine auszubringende Produkt.

Durch Interaktion mit den Elementen 3, 4, 5, 6, 7 durch eine Bedienperson kann die Steuervorrichtung veranlasst werden, weitere Anzeigen darzustellen, auf denen, abhängig davon, welches Element betätigt wurde, beispielsweise Details zur Maschineneinstellung oder Details zum auszubringenden Produkt dargestellt werden. Diese weiteren Anzeigen können wiederum Schalt- oder Bedienelemente aufweisen, welche die Darstellung unterschiedlicher Anzeigen ermöglichen. Durch die Bedienelemente kann es also insbesondere möglich sein, in unterschiedliche Menüs der Darstellung zu gelangen.

Fig. 1 zeigt außerdem ein Auswahlelement 8, das über der ersten Anzeige im Teilbereich 1 angeordnet ist. Das Auswahlelement 8 umfasst ein erstes Anzeigefeld 9 und ein zweites Anzeigefeld 10. Das erste Anzeigefeld 9 repräsentiert die erste Anzeige, während das zweite Anzeigefeld 10 die zweite Anzeige repräsentiert. Das erste Anzeigefeld 9 ist in diesem Beispiel unterschiedlich dargestellt als das zweite Anzeigefeld 10, da das erste Anzeigefeld 9 die aktive Anzeige im Teilbereich 1 repräsentiert.

Durch Interaktion mit dem Touchscreen im Bereich des zweiten Anzeigefelds 10 kann die Bedienperson von der ersten Anzeige auf die zweite Anzeige wechseln. Mit anderen Worten kann im Teilbereich 1 nach Interaktion mit dem Anzeigefeld 10 anstelle der ersten Anzeige die zweite Anzeige dargestellt werden.

Diese Darstellung ist in Fig. 2 schematisch illustriert. In diesem Fall ist im Teilbereich 1 des Touchscreens die zweite Anzeige dargestellt, welche Elemente 11, 12, 13, 14 umfasst, die mit der landwirtschaftlichen Maschine durchführbare Arbeitsschritte betreffen. Durch Interaktion mit einem der Elemente 11, 12, 13, 14 kann die Bedienperson die Steuervorrichtung beispielsweise veranlassen, ein Steuersignal oder Regelsignal an ein Gerät der landwirtschaftlichen Maschine zu übermitteln, sodass das Gerät eine entsprechende Funktion durchführt. Beispielsweise kann Element 14 das Entleeren eines Behälters, beispielsweise eines Düngerstreuers oder einer Feldspritze betreffen. Wenn die Bedienperson das Element 14 betätigt kann die Steuervorrichtung die landwirtschaftliche Maschine veranlassen, den Behälter zu entleeren.

Wie in Fig. 2 ersichtlich, ist nach dem Wechsel auf die zweite Anzeige nun das zweite Anzeigefeld 10 anders dargestellt als das Anzeigefeld 9, um die zweite Anzeige als aktive oder angezeigte Anzeige zu kennzeichnen. Beispielsweise kann die Farbe, Transparenz und/oder Helligkeit des Anzeigefelds 9, 10 variieren, abhängig davon, ob das Anzeigefeld die angezeigte oder nicht angezeigte Anzeige repräsentiert.

In dem Beispiel der Figuren 1 und 2 sind die Anzeigefelder 9, 10 in Form von Registerkartenreitern dargestellt. Es ist jedoch auch möglich, das Auswahlelement 8 in anderer Weise darzustellen, solange es einen Wechsel zwischen den beiden Anzeigen ermöglicht.

Die Elemente 11, 12, 13, 14 können insbesondere während der Bearbeitung einer landwirtschaftlichen Fläche benötigt werden, um Arbeitsschritte auf dem Feld zu steuern und/oder zu regeln. Mit anderen Worten kann es erforderlich sein, dass die Bedienperson mit den Elementen 11, 12, 13, 14 während des Bearbeitens der landwirtschaftlichen Fläche interagiert. Diese Elemente können daher größer dargestellt werden, also eine größere Schaltfläche bieten, als andere Elemente, die durch den Touchscreen dargestellt werden, beispielsweise im zweiten Teilbereich 2 angezeigten Elemente.

Im Teilbereich 2 können also Elemente dargestellt werden, die üblicherweise während des Bearbeitens der landwirtschaftlichen Fläche nicht oder nicht häufig benötigt werden. Die Darstellungsgröße der Elemente 11, 12, 13, 14 kann auch abhängig von der Geschwindigkeit der landwirtschaftlichen Maschine oder dessen Zugfahrzeugs gewählt werden. Beispielsweise kann die Fläche umso größer sein, je größer die Fahrgeschwindigkeit ist.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind. Insbesondere ist es auch möglich mehr als zwei Anzeigen vorzusehen. In diesem Fall kann das Auswahlelement 8 insbesondere auch mehr als zwei Anzeigefelder aufweisen.

## Patentansprüche

1. Steuervorrichtung für eine landwirtschaftliche Maschine, wobei über die Steuervorrichtung wenigstens eine Einstellung der landwirtschaftlichen Maschine veränderbar ist, und wobei über die Steuervorrichtung wenigstens ein Arbeitsschritt der landwirtschaftlichen Maschine steuerbar und/oder regelbar ist,
wobei die Steuervorrichtung einen Touchscreen umfasst, und wobei über Eingaben einer Bedienperson über den Touchscreen die wenigstens eine Einstellung veränderbar und der wenigstens eine Arbeitsschritt auswählbar ist,
**dadurch gekennzeichnet, dass**
der Touchscreen zur Darstellung von wenigstens zwei Anzeigen konfiguriert ist, wobei in einer ersten Anzeige Elemente (3, 4, 5, 6, 7) betreffend die landwirtschaftliche Maschine, Einstellungen der landwirtschaftlichen Maschine und/oder ein durch die landwirtschaftliche Maschine auszubringendes Produkt und in einer zweiten Anzeige Elemente (11, 12, 13, 14) betreffend mit der landwirtschaftlichen Maschine durchführbare Arbeitsschritte angezeigt werden, und wobei zwischen den wenigstens zwei Anzeigen durch Betätigen eines Auswahlelementes (8) gewechselt werden kann.

2. Steuervorrichtung nach Anspruch 1, wobei das Auswahlelement (8) ein erstes Anzeigefeld (9) und ein zweites Anzeigefeld (10) umfasst, wobei das erste Anzeigefeld (9) die erste Anzeige und das zweite Anzeigefeld (10) die zweite Anzeige repräsentiert, wobei das Anzeigefeld der angezeigten oder aktiven Anzeige unterschiedlich dargestellt wird als das Anzeigefeld der nicht angezeigten oder inaktiven Anzeige.

3. Steuervorrichtung nach Anspruch 2, wobei der Touchscreen so konfiguriert ist, dass die Anzeigefelder (9, 10) in Form von Registerkarten-Reitern über der jeweiligen Anzeige angezeigt werden.

4. Computer-implementiertes Verfahren zum Bedienen einer landwirtschaftlichen Maschine, umfassend die Schritte:
Darstellen einer ersten oder zweiten Anzeige auf einem Touchscreen einer Steuervorrichtung der landwirtschaftlichen Maschine, wobei in der ersten Anzeige Elemente (3, 4, 5, 6, 7) betreffend die landwirtschaftliche Maschine, Einstellungen der landwirtschaftlichen Maschine und/oder ein durch die landwirtschaftliche Maschine auszubringendes Produkt und in der zweiten Anzeige Elemente (11, 12, 13, 14) betreffend mit der landwirtschaftlichen Maschine durchführbare Arbeitsschritte angezeigt werden;
Darstellen eines Auswahlelementes (8) zum Wechseln der Anzeige;
Detektieren einer Betätigung des Auswahlelements (8) durch eine Bedienperson;
und
Wechseln der Anzeige von der dargestellten ersten oder zweiten Anzeige zur jeweils nicht dargestellten zweiten oder ersten Anzeige.

5. Computer-implementiertes Verfahren nach Anspruch 4, wobei das Darstellen des Auswahlelementes (8) umfasst:
Darstellen eines ersten Anzeigefelds (9) und eines zweiten Anzeigefelds (10),
wobei das erste Anzeigefeld (9) die erste Anzeige und das zweite Anzeigefeld (10) die zweite Anzeige repräsentiert, und wobei das Anzeigefeld der angezeigten oder
aktiven Anzeige unterschiedlich dargestellt wird als das Anzeigefeld der nicht angezeigten oder inaktiven Anzeige.

6. Computer-implementiertes Verfahren nach Anspruch 5, wobei die Anzeigefelder (9, 10) in Form von Registerkarten-Reitern über der jeweiligen Anzeige angezeigt werden.
